(19) Europäisches Patentamt
European Patent Office
Office européen des brevets

(11) **EP 4 621 473 A1**

(12) **EUROPEAN PATENT APPLICATION**
published in accordance with Art. 153(4) EPC

(43) Date of publication:
**24.09.2025 Bulletin 2025/39**

(21) Application number: **22968227.3**

(22) Date of filing: **16.12.2022**

(51) International Patent Classification (IPC):
***G02B 27/01*** (2006.01)

(52) Cooperative Patent Classification (CPC):
**G02B 27/01**

(86) International application number:
**PCT/CN2022/139483**

(87) International publication number:
**WO 2024/124519 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **DENG, Yali
Shenzhen, Guangdong 518129 (CN)**
• **LI, Weiwu
Shenzhen, Guangdong 518129 (CN)**
• **CAO, Huajun
Shenzhen, Guangdong 518129 (CN)**
• **YANG, Bo
Shenzhen, Guangdong 518129 (CN)**
• **LIU, Xin
Shenzhen, Guangdong 518129 (CN)**
• **XU, Wenwei
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **IMAGE GENERATION APPARATUS, DISPLAY DEVICE, VEHICLE AND IMAGE GENERATION METHOD**

(57)    Embodiments of this application provide an image generation apparatus, a display device, a vehicle, and an image generation method. The image generation apparatus includes an imaging module, a cylindrical lens array, and N collimating backlight modules, the cylindrical lens array includes M cylindrical lenses sequentially arranged in a first direction, the N collimating backlight modules include K groups of collimating backlight modules, each group of collimating backlight modules includes M collimating backlight modules sequentially arranged in the first direction, N=M×K, M>1, and K≥1. The N collimating backlight modules are configured to respectively output N channels of light beams, where each of the N channels of light beams includes a first collimated light beam, and the first collimated light beams are parallel to each other in the first direction. The imaging module is configured to separately modulate the N channels of light beams to obtain N channels of imaging light, where M channels of imaging light in each group in the N channels of imaging light are respectively transmitted to the M cylindrical lenses. The M cylindrical lenses are configured to respectively adjust transmission directions of the M channels of imaging light in each group.

FIG. 8

## Description

## TECHNICAL FIELD

This application relates to the field of light display, and in particular, to an image generation apparatus, a display device, a vehicle, and an image generation method.

## BACKGROUND

A naked-eye three-dimensional (3D) display technology has been hailed as a next-generation display technology because the technology restores a real world seen by human eyes, and has potential impact in fields such as advertisement, film and television, medical care, education, engineering, and exhibition. Important indicators for measuring the 3D display technology include a display resolution, a field of view, crosstalk, a depth of field, and the like of a 3D image. Essentially, a divergence characteristic of a light beam present after a sub-pixel passes through a slit or lens directly determines the depth of field of the 3D image and crosstalk between viewpoints.

It should be understood that excessive crosstalk between two viewpoints causes ghosting, and a limited depth of field range of a plurality of viewpoints reduces image clarity. This affects viewer's experience. Therefore, how to reduce a divergence characteristic of a light beam to eliminate crosstalk and improve a depth of field of a 3D image is a technical problem to be urgently resolved in the art.

## SUMMARY

Embodiments of this application provide an image generation apparatus, a display device, a vehicle, and an image generation method, to effectively reduce crosstalk between different viewpoints, improve a depth of field of an image, and make an overall structure lighter and thinner.

According to a first aspect, an embodiment of this application provides an image generation apparatus, where the image generation apparatus includes an imaging module, a cylindrical lens array, and N collimating backlight modules, the cylindrical lens array includes M cylindrical lenses sequentially arranged in a first direction, the N collimating backlight modules include K groups of collimating backlight modules, each group of collimating backlight modules includes M collimating backlight modules sequentially arranged in the first direction, $N=M \times K$, M is an integer greater than 1, and K is an integer greater than or equal to 1. Specifically, the N collimating backlight modules are configured to respectively output N channels of light beams, each of the N channels of light beams includes a first collimated light beam, and the first collimated light beams are parallel to each other in the first direction. The imaging module is configured to separately modulate the N channels of light beams to obtain N channels of imaging light, where the N channels of imaging light include K groups of imaging light, each group of imaging light includes M channels of imaging light, and the M channels of imaging light in each group are respectively transmitted to the M cylindrical lenses. The M cylindrical lenses are configured to respectively adjust transmission directions of the M channels of imaging light in each group.

In this implementation, light beams output by the collimating backlight modules include first collimated light beams parallel to each other in the first direction. The imaging module modulates the light beams output by the collimating backlight modules to obtain imaging light. After passing through the lens array, the imaging light can be transmitted to different viewpoints. It should be understood that a collimated light beam is used for imaging, so that a divergence angle of the light beam can be reduced. This can effectively reduce crosstalk between different viewpoints and improve a depth of field of an image. In addition, the M cylindrical lens arrays are distributed in the first direction. This application provides at least one group of M collimating backlight modules distributed in the first direction, that is, the collimating backlight modules in each group are in a one-to-one correspondence with the cylindrical lenses. It should be understood that, if a quantity of collimating backlight modules is less than a quantity of cylindrical lenses, a light beam output by each collimating backlight module needs to cover a plurality of cylindrical lenses. It can be learned from an optical path principle that the collimating backlight module requires a longer optical path to collimate the light beam, so the collimating backlight module usually needs to be larger in size. However, in a design manner in which collimating backlight modules are in a one-to-one correspondence with lenses, a light beam output by each collimating backlight module needs to cover only the corresponding lens, to shorten an optical path required by the collimating backlight module to collimate the light beam. In this way, the collimating backlight module can be designed to be lighter and thinner.

In some possible implementations, each of the N channels of light beams further includes a second collimated light beam, and second collimated light beams are parallel to each other in a second direction. K is an integer greater than 1. The K groups of collimating backlight modules are distributed in the second direction. The first direction is perpendicular to the second direction. The image generation apparatus further includes a diffusion module. The diffusion module is located between the collimating backlight module and the imaging module. The diffusion module is configured to diverge each channel of second collimated light beam.

In this implementation, this application is mainly applied to a 3D display scenario, and different viewpoints are arranged in the first direction. In view of this, this application requires that the first collimated light beams incident to the cylindrical lens array be parallel to each other in the first direction, to reduce crosstalk between viewpoints. However, in this application, a collimating backlight module for two-dimensional collimation may also be used, that is, the N collimating backlight modules are distributed in an array in the first direction and the second direction, that is, K is greater than 1, for example, K=M. Each collimating backlight module may also output the second collimated light beam, where the second collimated light beams are parallel to each other in the second direction; and then the diffusion module is configured to diverge the second collimated light beam. This means that a collimating backlight module for one-dimensional collimation is used. In this way, an adaptive collimating backlight module is expanded in this implementation.

In some possible implementations, imaging light passing through the cylindrical lens array is transmitted to a plurality of different positions, and the imaging light transmitted to the different positions includes different image information. To be specific, a plurality of different viewpoints are distributed in space, and images with parallax are seen at the different viewpoints, that is, different images may be seen by a left eye and a right eye, to implement a 3D display effect, so that this solution is conveniently applied to a naked eye 3D display scenario.

In some possible implementations, each of the collimating backlight modules includes a light source and a parabolic structure, and the parabolic structure is configured to collimate a light beam emitted by the light source. It should be understood that a reflective parabolic structure is used to collimate a light beam, so that the light source and the parabolic structure can be designed more compactly, making an overall structure lighter and thinner.

In some possible implementations, the light source is provided at a focus of the parabolic structure, to achieve an optimal collimation effect of the parabolic structure.

In some possible implementations, a maximum length of each cylindrical lens in the first direction is equal to an aperture of the parabolic structure in the first direction. It should be noted that a length of the cylindrical lens in the first direction is P=quantity of viewpoints×pixel size. A pixel size on the imaging module is determined, and the quantity of viewpoints may be determined based on an actual requirement. In this case, a size of the cylindrical lens may be determined, and correspondingly, the aperture of the parabolic structure is determined, so that a parabolic structure of a proper size may be designed.

In some possible implementations, the aperture of the parabolic structure in the first direction and a focal length of the parabolic structure satisfy the following formula:

$$\frac{f}{D} = \frac{1}{4\frac{\sin\varphi}{1+\cos\varphi}},$$

where
f indicates the focal length of the parabolic structure, D indicates the aperture of the parabolic structure in the first direction, and φ indicates one half of a divergence angle of the light source. It should be understood that the focal length of the parabolic structure may be determined based on a calculation relationship between the aperture and the focal length of the parabolic structure, to design a parabolic structure that meets a requirement.

According to a second aspect, an embodiment of this application provides an image generation apparatus, where the image generation apparatus includes an imaging module, a microlens array, and N collimating backlight modules, the microlens array includes N microlenses, N is an integer greater than 1, the microlenses in the microlens array are arranged in a first direction and a second direction respectively, the N collimating backlight modules are arranged in the first direction and the second direction respectively, and the first direction is perpendicular to the second direction. Specifically, the N collimating backlight modules are configured to respectively output N channels of collimated light beams to the imaging module, where the collimated channels of light beams are parallel to each other in both the first direction and the second direction. The imaging module is configured to separately modulate the N collimated light beams to obtain N channels of imaging light, where the N channels of imaging light are respectively transmitted to the N microlenses. The N microlenses are configured to respectively adjust transmission directions of the N channels of imaging light.

It should be noted that the cylindrical lens array in the first aspect can provide parallax in only one dimension, and a parabolic structure for one-dimensional collimation or two-dimensional collimation may be flexibly used according to the foregoing descriptions. In this implementation, the cylindrical lens array may be replaced with a microlens array, where the microlens array may provide a full-parallax image in two dimensions. In this case, if a microlens array is used in the image generation apparatus, only a parabolic structure for two-dimensional collimation can be used. This implementation can effectively reduce crosstalk between different viewpoints and improve a depth of field of an image, so that a collimating backlight module can be designed to be lighter and thinner.

In some possible implementations, imaging light passing through the microlens array is transmitted to a plurality of different positions, and the imaging light transmitted to the different positions includes different image information.

In some possible implementations, each of the collimating backlight modules includes a light source and a parabolic structure, and the parabolic structure is configured to collimate a light beam emitted by the light source.

In some possible implementations, the light source is provided at a focus of the parabolic structure.

In some possible implementations, a maximum length of each microlens in the microlens array in the first direction is equal to an aperture of the parabolic structure in the first direction, and a maximum length of each microlens in the microlens array in the second direction is equal to an aperture of the parabolic structure in the second direction.

In some possible implementations, the aperture of the parabolic structure in the first direction or the second direction and a focal length of the parabolic structure satisfy the following formula:

$$\frac{f}{D} = \frac{1}{4\frac{\sin\varphi}{1+\cos\varphi}},$$

where

f indicates the focal length of the parabolic structure, D indicates the aperture of the parabolic structure in the first direction or the second direction, and $\varphi$ indicates one half of a divergence angle of the light source.

According to a third aspect, an embodiment of this application provides a display device. The display device includes a processor and the image generation apparatus according to any one of the implementations of the first aspect and the second aspect. The processor is configured to send image data to the imaging module in the image generation apparatus. The imaging module modulates incident light based on the image data to obtain imaging light that includes image information. An application scenario of the display device includes but is not limited to a head-up display (Head-Up Display, HUD), a projector, an augmented reality (Augmented Reality, AR) device, a virtual reality (Virtual Reality, VR) device, and the like.

According to a fourth aspect, an embodiment of this application provides a vehicle. The vehicle includes a display device, and the display device is mounted in the vehicle. For example, the display device may be mounted in the vehicle as an HUD, an in-vehicle display, or a vehicle light.

According to a fifth aspect, an embodiment of this application provides an image generation method, where the image generation method is applied to an image generation apparatus, which includes an imaging module, a cylindrical lens array, and N collimating backlight modules, the cylindrical lens array includes M cylindrical lenses sequentially arranged in a first direction, the N collimating backlight modules include K groups of collimating backlight modules, each group of collimating backlight modules includes M collimating backlight modules sequentially arranged in the first direction, N=M×K, M is an integer greater than 1, and K is an integer greater than or equal to 1. The image generation method specifically includes the following steps: respectively outputting N channels of light beams by using the N collimating backlight modules, where each of the N channels of light beams includes a first collimated light beam, and the first collimated light beams are parallel to each other in the first direction; separately modulating the N channels of light beams by using the imaging module, to obtain N channels of imaging light, where the N channels of imaging light include K groups of imaging light, each group of imaging light includes M channels of imaging light, and the M channels of imaging light in each group are respectively transmitted to the M cylindrical lenses; and respectively adjusting transmission directions of the M channels of imaging light in each group by using the M cylindrical lenses.

In some possible implementations, each of the N channels of light beams further includes a second collimated light beam, the second collimated light beams are parallel to each other in a second direction, K is an integer greater than 1, the K groups of collimating backlight modules are distributed in the second direction, the first direction is perpendicular to the second direction, the image generation apparatus further includes a diffusion module, and the diffusion module is located between the collimating backlight module and the imaging module. The method further includes: diverging each channel of second collimated light beam by using the diffusion module.

In some possible implementations, imaging light passing through the cylindrical lens array is transmitted to a plurality of different positions, and the imaging light transmitted to the different positions includes different image information.

In some possible implementations, each of the collimating backlight modules includes a light source and a parabolic structure. The method further includes: collimating, by using the parabolic structure, a light beam emitted by the light source.

In some possible implementations, the light source is provided at a focus of the parabolic structure.

In some possible implementations, a maximum length of each cylindrical lens in the first direction is equal to an aperture of the parabolic structure in the first direction.

In some possible implementations, the aperture of the parabolic structure in the first direction and a focal length of the parabolic structure satisfy the following formula:

$$\frac{f}{D} = \frac{1}{4\frac{\sin\varphi}{1+\cos\varphi}},$$

where

f indicates the focal length of the parabolic structure, D indicates the aperture of the parabolic structure in the first direction, and $\varphi$ indicates one half of a divergence angle of the light source.

According to a sixth aspect, an embodiment of this application provides an image generation method, where the image generation method is applied to an image generation apparatus, the image generation apparatus includes an imaging module, a microlens array, and N collimating backlight modules, the microlens array includes N microlenses, N is an integer greater than 1, the microlenses in the microlens array are arranged in a first direction and a second direction respectively, the N collimating backlight modules are arranged in the first direction and the second direction respectively, and the first direction is perpendicular to the second direction. The image generation method specifically includes the following steps: outputting N channels of collimated light beams to the imaging module by using the N collimating backlight modules, where the collimated light beams are parallel to each other in both the first direction and the second direction; separately modulating the N channels of collimated light beams by using the imaging module, to obtain N channels of imaging light, where the N channels of imaging light are respectively transmitted to the N microlenses; and respectively adjusting transmission directions of the N channels of imaging light by using the N microlenses.

In some possible implementations, imaging light passing through the microlens array is transmitted to a plurality of different positions, and the imaging light transmitted to the different positions includes different image information.

In some possible implementations, each of the collimating backlight modules includes a light source and a parabolic structure. The method further includes: collimating, by using the parabolic structure, a light beam emitted by the light source.

In some possible implementations, the light source is provided at a focus of the parabolic structure.

In some possible implementations, a maximum length of each microlens in the microlens array in the first direction is equal to an aperture of the parabolic structure in the first direction, and a maximum length of each microlens in the microlens array in the second direction is equal to an aperture of the parabolic structure in the second direction.

In some possible implementations, the aperture of the parabolic structure in the first direction or the second direction and a focal length of the parabolic structure satisfy the following formula:

$$\frac{f}{D} = \frac{1}{4\frac{\sin\varphi}{1+\cos\varphi}},$$

where

f indicates the focal length of the parabolic structure, D indicates the aperture of the parabolic structure in the first direction or the second direction, and $\varphi$ indicates one half of a divergence angle of the light source.

In this embodiment of this application, light beams output by the collimating backlight modules include first collimated light beams parallel to each other in the first direction. The imaging module modulates the light beams output by the collimating backlight modules to obtain imaging light. After passing through the lens array, the imaging light can be transmitted to different viewpoints. It should be understood that a collimated light beam is used for imaging, so that a divergence angle of the light beam can be reduced. This can effectively reduce crosstalk between different viewpoints and improve a depth of field of an image. In addition, the M cylindrical lens arrays are distributed in the first direction. This application provides at least one group of M collimating backlight modules distributed in the first direction, that is, the collimating backlight modules in each group are in a one-to-one correspondence with the cylindrical lenses. It should be understood that, if a quantity of collimating backlight modules is less than a quantity of cylindrical lenses, a light beam output by each collimating backlight module needs to cover a plurality of cylindrical lenses. It can be learned from an optical path principle that the collimating backlight module requires a longer optical path to collimate the light beam, so the collimating backlight module usually needs to be larger in size. However, in a design manner in which collimating backlight modules are in a one-to-one correspondence with lenses, a light beam output by each collimating backlight module needs to cover only the corresponding lens, to shorten an optical path required by the collimating backlight module to collimate the light beam. In this way, the collimating backlight module can be designed to be lighter and thinner.

**BRIEF DESCRIPTION OF DRAWINGS**

FIG. 1 is a diagram of a 3D display scenario;
FIG. 2(a) is a diagram of an optical path in which a slit grating is used;
FIG. 2(b) is a diagram of an optical path in which a lens is used;
FIG. 3 is a diagram of a first structure of an image generation apparatus according to an embodiment of this application;
FIG. 4 is a diagram of a three-dimensional structure of a collimating backlight module according to an embodiment of this application;
FIG. 5 is a diagram of a second structure of an image generation apparatus according to an embodiment of this application;
FIG. 6(a) is a parabolic structure for implementing one-dimensional collimation;
FIG. 6(b) is a parabolic structure for implementing two-dimensional collimation;
FIG. 7 is a diagram of a third structure of an image generation apparatus according to an embodiment of this application;
FIG. 8 is a diagram of a planar optical path of an image generation apparatus according to an embodiment of this application;
FIG. 9 is a diagram of a planar structure of a collimating backlight module according to an embodiment of this application;

FIG. 10 is a diagram of comparison of crosstalk distribution between Lambertian light emission and collimated light emission;

FIG. 11 is a diagram of a structure of a display device according to an embodiment of this application;

FIG. 12 is a diagram in which a display device is mounted in a vehicle according to an embodiment of this application;

FIG. 13 is a diagram of an embodiment of an image generation method according to this application; and

FIG. 14 is a diagram of an embodiment of another image generation method according to this application.

## DESCRIPTION OF EMBODIMENTS

Embodiments of this application provide an image generation apparatus, a display device, a vehicle, and an image generation method, which may be mainly applied to a naked-eye 3D display scenario. In this application, a collimated light beam is used for imaging, so that a divergence angle of the light beam can be reduced. This can effectively reduce crosstalk between different viewpoints and improve a depth of field of an image. In addition, in a design manner in which collimating backlight modules are in a one-to-one correspondence with lenses, a light beam output by each collimating backlight module only needs to cover the corresponding lens, to shorten an optical path required by the collimating backlight module to collimate the light beam. In this way, the collimating backlight module can be designed to be lighter and thinner.

It should be noted that in the specification, claims, and the foregoing accompanying drawings of this application, the terms "first", "second", and the like are intended to distinguish between similar objects but do not limit a specific order or sequence. It should be understood that the foregoing terms are interchangeable in proper cases, so that embodiments described in this application can be implemented in a sequence other than the content described in this application. In addition, the terms "include", "have", and any other variant thereof are intended to cover a non-exclusive inclusion. For example, a process, method, system, product, or device that includes a list of steps or units is not necessarily limited to those expressly enumerated steps or units, but may include other steps or units not expressly enumerated or inherent to such a process, method, product, or device.

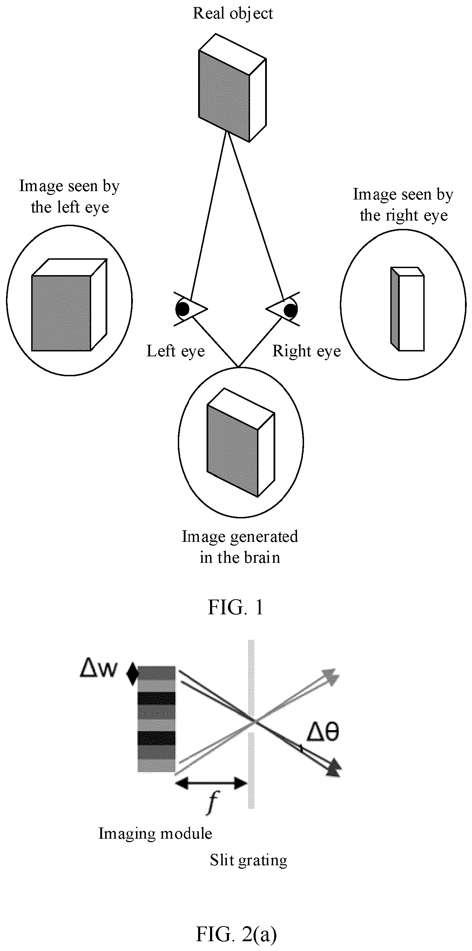

FIG. 1 is a diagram of a 3D display scenario. As shown in FIG. 1, because there is usually a distance of 6-7 centimeters between eyes of a person, there is a slight difference between an image seen by the left eye and an image seen by the right eye. The difference is referred to as "binocular parallax". Further, the brain interprets the binocular parallax and determines a distance from an object to produce stereo vision. An image generation apparatus provided in this application may be used in a naked-eye 3D display scenario. Different from conventional 3D display based on glasses, naked-eye 3D display does not require wearing any device, but directly sends different images to different eyes. Imaging light output by the image display apparatus may be transmitted to different viewpoints in space, and a 3D image can be seen when a viewer's left eye and right eye are respectively located at different viewpoints.

It should be noted that, after an imaging module in the image display apparatus modulates an incident light beam to obtain imaging light, the imaging light may be converged by using a slit grating or a lens. Descriptions are separately provided below.

FIG. 2(a) is a diagram of an optical path in which a slit grating is used. As shown in FIG. 2(a), the imaging module includes a plurality of pixels, a length of a pixel in a vertical direction is denoted as $\Delta W$, a distance between the imaging module and the slit grating in a horizontal direction is denoted as f, a depth of field of the imaging light (which may also be referred to as a screen-out distance) is denoted as L, and a divergence angle, output by each pixel, of a light beam passing through the slit grating is denoted as $\Delta\theta$, where a width of the imaging light may be denoted as $L\Delta\theta = L\dfrac{\Delta W}{f}$.

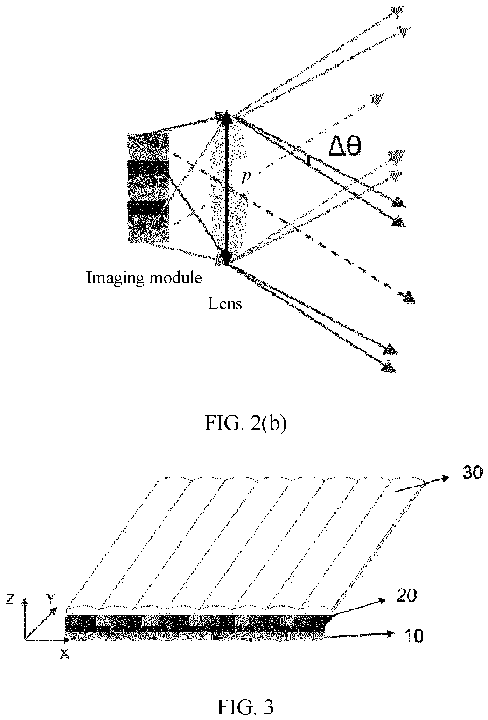

FIG. 2(b) is a diagram of an optical path in which a lens is used. Different from FIG. 2(a), in FIG. 2(b), a lens is used to replace the slit grating shown in FIG. 2(a), a length of the lens in the vertical direction is denoted as p, and the width of the imaging light may be denoted as p + $L\Delta\theta = p + L\dfrac{\Delta W}{f}$ . Theoretically, in a focusing mode, a value of L is determined by p. A smaller value of p indicates a smaller value of L, and a larger value of p indicates a larger value of L.

Specifically, a lens rather than a slit grating is used in the image generation apparatus provided in this application. It should be understood that divergence of the light beam may be reduced by adjusting the length P of the lens in the vertical direction, but a loss of the depth of field is caused. Therefore, in this application, a light beam emitted by a light source is first collimated, and then the collimated light beam is used for imaging. Collimated imaging light first converges and then diverges through the lens. In essence, this can achieve imaging based on light directivity instead of an element lens. In this case, a width of the light beam may be similar to that of a slit grating, and depends only on $\Delta W$ and f, and the length P of the lens in the vertical direction does not need to be reduced. Therefore, crosstalk can be well eliminated without loss of a depth of field. In addition, because a collimated light beam is used in this application, there is no need to use a baffle plate to block a light beam, to reduce a divergence angle, so that a brightness loss is reduced.

The following describes in detail the image generation apparatus provided in this application. For ease of description, a coordinate direction is first defined as an X direction, a Y direction, and a Z direction, where the Z direction is an overall thickness direction of the image generation apparatus, and the X direction and the Y direction that are perpendicular to each other exist in a plane perpendicular to the Z direction. It should be noted that the collimated light beams mentioned in this application are light beams parallel to each other in an ideal state. However, in an actual application, the collimated light beams may not be completely parallel to each other. In view of this, light beams whose divergence angles are close to 0 are also considered as collimated light beams parallel to each other in this application. In addition, collimated light beams parallel to each other in a direction mentioned in this application may be considered as light beams obtained by collimating the light beams divergent in the direction. If collimating is performed in one direction, it is referred to as "one-dimensional collimation". If collimating is performed in two directions, it is referred to as "two-dimensional collimation".

FIG. 3 is a diagram of a first structure of an image generation apparatus according to an embodiment of this application. As shown in FIG. 3, the image generation apparatus includes N collimating backlight modules 10, an imaging module 20, and a cylindrical lens array 30. The cylindrical lens array 30 includes M cylindrical lenses sequentially arranged in an X direction. The N collimating backlight modules 10 include K groups of collimating backlight modules, and each group of collimating backlight modules includes M collimating backlight modules that are sequentially arranged in the X direction and that are in a one-to-one correspondence with M cylindrical lenses. That is, $N = M \times K$, where M is an integer greater than 1, and K is an integer greater than or equal to 1. To be specific, if K=1, it indicates that (N=M) collimating backlight modules distributed in the X direction are included; or if K>1, it indicates that ($N = M \times K$) collimating backlight modules distributed in an array in the X direction and a Y direction are included. Regardless of whether K=1 or K>1, the M collimating backlight modules in each group distributed in the X direction are in a one-to-one correspondence with the M cylindrical lenses. It should be understood that, if the N collimating backlight modules need to implement one-dimensional collimation, the N collimating backlight modules may be distributed in one dimension or two dimensions, that is, K=1 or K>1. If the N collimating backlight modules need to implement two-dimensional collimation, the N collimating backlight modules should be distributed in two dimensions, that is, K>1. The following separately describes a one-dimensional collimation solution and a two-dimensional collimation solution with reference to the cylindrical lens array.

FIG. 3 is an example in which a collimating backlight module for implementing one-dimensional collimation is used. Specifically, the imaging module 20 is located between the N collimating backlight modules 10 and the cylindrical lens array 30. The N collimating backlight modules 10 are configured to output N channels of light beams respectively, where each channel of light beams includes a first collimated light beam, first collimated light beams are in parallel to each other in the X direction, and each channel of light beam includes a light beam diverging in another direction in addition to the first collimated light beam. The imaging module 20 is configured to separately modulate the N channels of light beams to obtain N channels of imaging light. M channels of light beams from each group of collimating backlight modules are modulated by using the imaging module 20 to obtain corresponding M channels of imaging light, and the M channels of imaging light are respectively transmitted to the M cylindrical lenses in the cylindrical lens array 30. Further, the M cylindrical lenses in the cylindrical lens array 30 are configured to respectively adjust M channels of incident imaging light in each group, to transmit the channels of imaging light to a plurality of viewpoints in space.

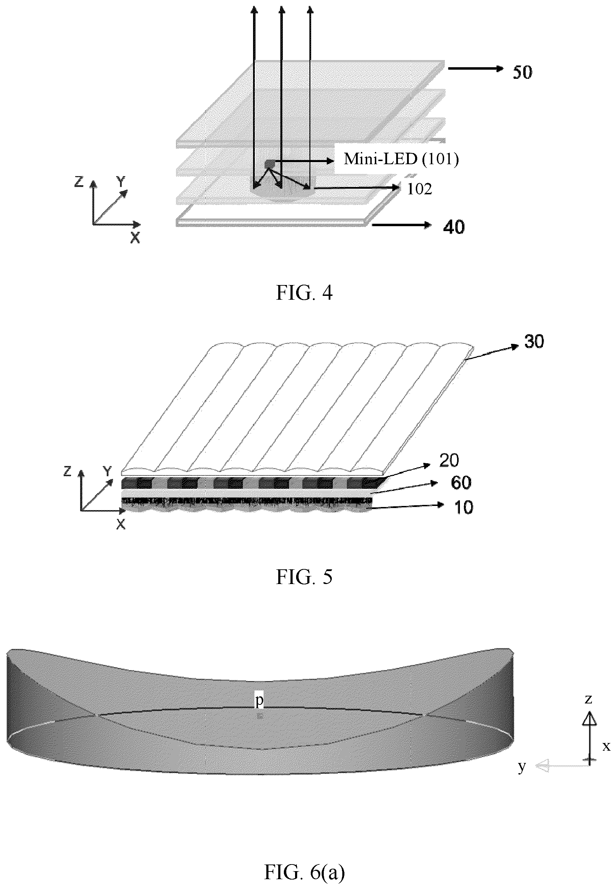

FIG. 4 is a diagram of a three-dimensional structure of a collimating backlight module according to an embodiment of this application. As shown in FIG. 4, the collimating backlight module 10 includes a light source 101 and a parabolic structure 102. Specifically, the parabolic structure 102 is configured to: collimate a divergence light beam emitted by the light source 101, and reflect the collimated light beam to the imaging module 20. In some possible implementations, the image generation apparatus further includes a substrate 40 and a driving module 50. The collimating backlight module 10 is placed on the substrate 40. The driving module 50 is configured to drive the light source 101 to emit light. The collimating backlight module 10 may be attached to the substrate 40 and the driving module 50 by using glue. It should be understood that a light beam collimated by the parabolic structure 102 may be transmitted to the imaging module 20 by using the driving module 50. For example, the driving module 50 may be a thin-film field effect transistor (Thin Film Transistor, TFT) made of a transparent material.

In a possible implementation, FIG. 3 is used as an example. If K=1 and a parabolic structure in each collimating backlight module is the same length as a corresponding cylindrical lens in the Y direction, each collimating backlight module may also include a plurality of light sources that are equally spaced apart from each other in the Y direction, so that light beams emitted by the plurality of light sources can completely cover all positions of the parabolic structure. A specific quantity of used light sources is subject to an actual requirement, and is not limited herein.

It should be noted that a specific type of the imaging module 20 is not limited in this application. For example, the imaging module 20 may be specifically a liquid crystal display (Liquid Crystal Display, LCD). A plurality of pixel regions are distributed in the imaging module 20. Liquid crystal droplets at a liquid crystal layer of the imaging module 20 are included in a fine cell structure. One or more cells may form one pixel region. It should be understood that, the imaging module 20 modulates incident light in each pixel region based on loaded image data. Specifically, the imaging module 20 displays image information of each viewpoint in pixels, and then composites a plurality of parallax images into one image based on a mapping relationship and a composite coding rule. The incident light passes through the composite image to obtain imaging light, and the imaging light is refracted by a lens to a specified position in space, to form spatial viewpoint distribution. Different images with parallax are seen at different viewpoints, that is, different images can be seen by a left eye and a right eye, to implement a 3D display effect.

It should be further noted that, in the image generation apparatus with the cylindrical lens array shown in FIG. 3, the parabolic structure 102 is specifically configured to collimate a light beam that is emitted by the light source 101 and that diverges in the X direction, to obtain the first collimated light beam, that is, the first collimated light beams are parallel to each other in the X direction, to implement one-dimensional collimation. It should be understood that light emission of the light source 101 is similar to Lambertian light emission, and light is divergent in all directions. This application is mainly applied to a 3D display scenario, and different viewpoints are arranged in the X direction. In view of this, this application requires that light incident to the cylindrical lens array 30 is collimated in the X direction and diverges in the Y direction, the collimated light beam in the X direction first converges and then diverges through the cylindrical lens, and the diverged light beam in the Y direction is directly transmitted out from the cylindrical lens, so that crosstalk between viewpoints is reduced and integrity of a viewing image is not affected. For example, if the light incident to the cylindrical lens array 30 is also collimated in the Y direction, because a divergence angle in the Y direction is excessively small, a viewer cannot see a complete image if the viewer is in an upper or lower position.

FIG. 5 is a diagram of a second structure of an image generation apparatus according to an embodiment of this application. As shown in FIG. 5, in another possible implementation, a collimating backlight module 10 that implements two-dimensional collimation may be further used, that is, N collimating backlight modules 10 are distributed in an array in an X direction and a Y direction. A parabolic structure 102 collimates a light beam that is emitted by a light source 101 and that diverges in the X direction, to obtain a first collimated light beam, and collimates a light beam that is emitted by the light source 101 and that diverges in the Y direction, to obtain a second collimated light beam. That is, first collimated light beams are parallel to each other in the X direction, and second collimated light beams are parallel to each other in the Y direction. Preferably, N=M×M, so that a collimation effect in the X direction is equivalent to that in the Y direction. In addition, a diffusion module 60 is further disposed between the collimating backlight module 10 and the imaging module 20. The diffusion module 60 is configured to diverge the second collimated light beam. In this way, light incident to a cylindrical lens array 30 is collimated in the X direction and diverges in the Y direction, which is equivalent to the one-dimensional collimation solution shown in FIG. 3, and can reduce crosstalk between viewpoints without affecting integrity of a viewed image.

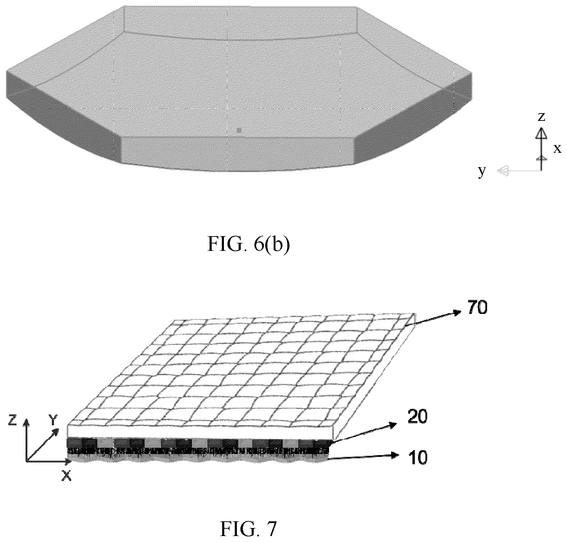

FIG. 6(a) is a parabolic structure for implementing one-dimensional collimation. FIG. 6(b) is a parabolic structure for implementing two-dimensional collimation. It can be learned from comparison between FIG. 6(a) and FIG. 6(b) that, a parabolic structure 102 for implementing one-dimensional collimation and a parabolic structure 102 for implementing two-dimensional collimation are different in form. In an actual application, parabolic structures with different forms may be flexibly selected as required.

It should be understood that, in the image generation apparatus with the cylindrical lens array, a light beam may be collimated in another manner different from using a parabolic structure. This is not specifically limited herein. If a one-dimensional collimation manner is used, collimated light beams need to be parallel to each other in the X direction. If a two-dimensional collimation manner is used, the diffusion module needs to be used to diverge collimated light beams other than the collimated light beams parallel to each other in the X direction.

It should be noted that the cylindrical lens array can provide parallax in only one dimension (the X direction), and a parabolic structure for one-dimensional collimation or two-dimensional collimation may be flexibly used cooperatively according to the foregoing descriptions. In another possible implementation, the cylindrical lens array may be replaced with a microlens array, where the microlens array may provide a full-parallax image in two dimensions (in the X direction and the Y direction). In this case, if a microlens array is used in the image generation apparatus, only a parabolic structure for two-dimensional collimation can be used cooperatively. The following provides descriptions with reference to the accompanying drawings.

FIG. 7 is a diagram of a third structure of an image generation apparatus according to an embodiment of this application. As shown in FIG. 7, the image generation apparatus includes N collimating backlight modules 10, an imaging module 20, and a microlens array 70, where N is an integer greater than 1. The microlens array 70 includes N microlenses. The N microlenses are in a one-to-one correspondence with the N collimating backlight modules. The microlenses in the microlens array 70 are arranged in an X direction and a Y direction respectively, and the N collimating backlight modules 10 are also arranged in the X direction and the Y direction respectively. Specifically, the imaging module 20 is located between the N collimating backlight modules 10 and the microlens array 70. The N collimating backlight modules 10 are configured to respectively output N channels of collimated light beams to the imaging module 20. For example, the collimating backlight module 10 includes a light source 101 and a parabolic structure 102. The parabolic structure 102 collimates a light beam that is emitted by the light source 101 and that diverges in the X direction and the Y direction, so that the obtained collimated light beams are parallel to each other in both a first direction and a second direction. The imaging module 20 is configured to: separately modulate the N channels of collimated light beams to obtain N channels of imaging light, and separately transmit the N channels of imaging light to the N microlenses in the microlens array 70. In this way, each lens in the microlens array 70 is configured to adjust an incident light beam to transmit the light beam to a plurality of viewpoints in space. In this embodiment, for the collimating backlight module 10 and the imaging module 20, refer to related descriptions of the embodiment shown in FIG. 3. Details are not described herein again.

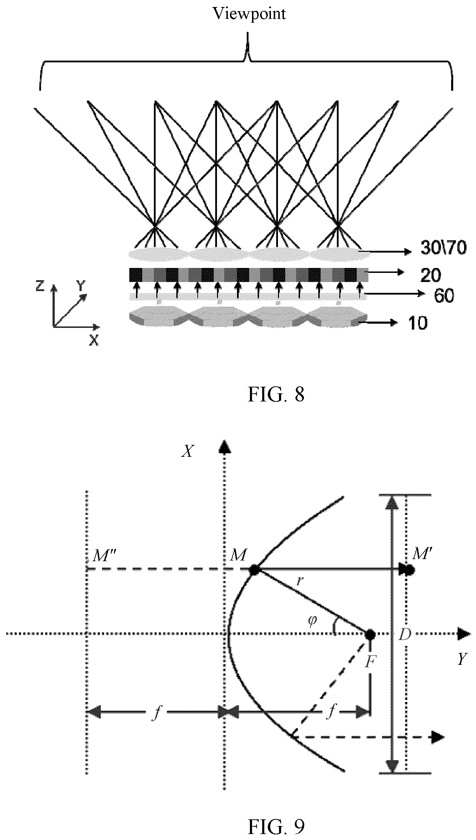

FIG. 8 is a diagram of a planar optical path of the image generation apparatus according to this embodiment of this application. As shown in FIG. 8, in the embodiments shown in FIG. 3 and FIG. 5, M collimating backlight modules in each group distributed in the X direction may be in a one-to-one correspondence with M cylindrical lenses in a cylindrical lens array 30. In the embodiment shown in FIG. 7, N collimating backlight modules may be in a one-to-one correspondence with the N microlens in the microlens array 70. A light beam output by each collimating backlight module is transmitted to the corresponding lens after passing through an imaging module, that is, the collimating backlight module is also aligned with the corresponding lens in a placement position. It should be understood that, if a quantity of collimating backlight modules is less than a quantity of lenses, a light beam output by each collimating backlight module needs to cover a plurality of lenses. It can be learned from an optical path principle that a distance between the light source and the parabolic structure needs to be increased to improve a coverage area of the light beam. The collimating backlight module requires a longer optical path to collimate the light beam, so the collimating backlight module usually needs to be larger in size. However, in a design manner in which collimating backlight modules are in a one-to-one correspondence with lenses, a light beam output by each collimating backlight module only needs to cover the corresponding lens, so that the light source and the parabolic structure can be designed to be more compact, to shorten an optical path required by the collimating backlight module to collimate the light beam. In this way, the collimating backlight module can be designed to be lighter and thinner.

In a possible implementation, in the embodiments shown in FIG. 3 and FIG. 5, an aperture of each parabolic structure in the X direction is equal to a maximum length of a corresponding cylindrical lens in the X direction. In the embodiment shown in FIG. 7, an aperture of each parabolic structure in the X direction is equal to a maximum length of a corresponding microlens in the X direction, and an aperture of each parabolic structure in the Y direction is equal to a maximum length of a corresponding microlens in the Y direction. It should be understood that theoretically, an aperture of the parabolic structure may be infinitely large. However, in this application, an opening size of the parabolic structure, namely, the aperture of the parabolic structure, may be determined based on a size of the lens.

It should be noted that, a cylindrical lens is used as an example, and a length of the cylindrical lens in the X direction is P=quantity of viewpoints×pixel size. A pixel size on the imaging module 20 is determined, and the quantity of viewpoints may be determined based on an actual requirement. In this case, a size of the cylindrical lens may be determined, and correspondingly, the aperture of the parabolic structure is determined. Further, a focal length of the parabolic structure may be determined based on a calculation relationship between the aperture and the focal length of the parabolic structure, to design a parabolic structure that meets a requirement. Preferably, the light source may be provided at a focus of the parabolic structure, to achieve an optimal collimation effect of the parabolic structure.

FIG. 9 is a diagram of a planar structure of the collimating backlight module according to this embodiment of this application. As shown in FIG. 9, an aperture of the parabolic structure is denoted as D, the focus of the parabolic structure is denoted as F, a focal length of the parabolic structure is denoted as f, one half of a divergence angle of the light source is denoted as $\varphi$, any point on the parabolic structure is denoted as M, and a distance between M and F is denoted as r. A specific calculation principle is as follows: $2f = r + r\cos\varphi = r(1 + \cos\varphi)$ and

$$y = r\sin\varphi = \frac{2f\sin\varphi}{1+\cos\varphi} = \frac{D}{2}$$ . A ratio of the focal length to the aperture is $\frac{f}{D} = \frac{1}{4\frac{\sin\varphi}{1+\cos\varphi}} = \frac{1}{4\text{tg}(\varphi/2)}$ .

For example, the divergence angle of the light source is 120°. In this case, $\varphi = 60°$ and $\frac{f}{D} = \frac{\sqrt{3}}{4}$ .

It should be noted that a shape of a cross section of the parabolic structure at an opening position is not limited in this application. For example, the cross section may be a hexagon shown in FIG. 8, or may be a circle, or another regular polygon.

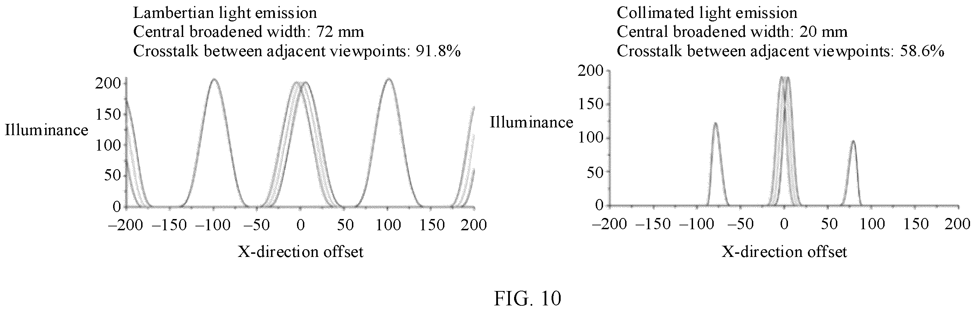

FIG. 10 is a diagram of comparison of crosstalk distribution between Lambertian light emission and collimated light emission. As shown in FIG. 10, light beam distribution of a central viewpoint and viewpoints on left and right sides of the central viewpoint is simulated. The simulation is based on lighttools optical simulation. Structural parameters of the image generation apparatus are input, and a propagation path of a light beam is simulated by using a probability statistics method. For simulation of a single viewpoint, pixel distribution follows a composite coding rule. Lambertian light emission is used as a light source. A width of a broadened light beam of the central viewpoint is 72 mm, and crosstalk between adjacent viewpoints is up to 91.8%. Herein, the crosstalk is calculated by using a ratio of an intensity value of adjacent viewpoints corresponding to a peak value of the central viewpoint to a peak intensity value. Correspondingly, the collimating backlight module provided in this application is used, so that a width of a broadened light beam of the central viewpoint is 20 mm, and crosstalk between adjacent viewpoints may be reduced to 58.6%.

In conclusion, the image generation apparatus provided in this embodiment of this application implements collimation of a light beam by using a collimating backlight module, and the imaging module modulates a collimated light beam to obtain imaging light. The imaging light may be transmitted to different viewpoints after passing through a lens array. It should be understood that a collimated light beam is used for imaging, so that a divergence angle of the light beam can be reduced. This can effectively reduce crosstalk between different viewpoints and improve a depth of field of an image. In addition, in this application, in a design manner in which collimating backlight modules are in a one-to-one correspondence with lenses, a light beam output by each collimating backlight module needs to cover only the corresponding lens, to shorten an optical path required by the collimating backlight module to collimate the light beam. In this way, the collimating backlight module can be designed to be lighter and thinner.

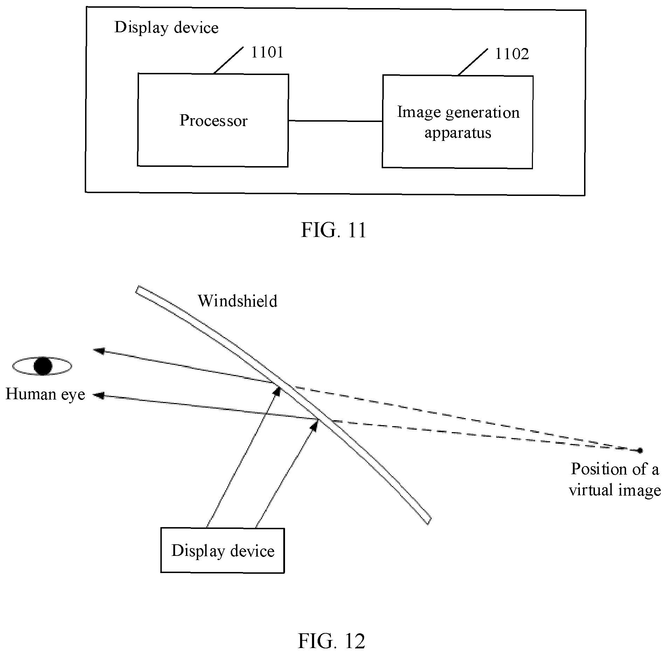

An embodiment of this application further provides a display device. FIG. 11 is a diagram of a structure of a display device according to an embodiment of this application. As shown in FIG. 11, the display device includes a processor 1101 and an image generation apparatus 1102. The image generation apparatus 1102 may be the image generation apparatus described in any one of the foregoing embodiments. The processor 1101 is configured to send image data to an imaging module in the image generation apparatus 1102. The imaging module in the image generation apparatus 1102 modulates incident light based on the image data to obtain imaging light that includes image information.

It should be noted that an application scenario of the display device includes but is not limited to a PC, a tablet computer, a mobile phone, a head-up display (Head-Up Display, HUD), a projector, an augmented reality (Augmented Reality, AR) device, a virtual reality (Virtual Reality, VR) device, and the like. In an example, the display device in this application is integrated into an HUD. The HUD may project navigation information, instrument information, and the like into a driver's front field of view, to prevent the driver from looking down to view the information, so that driving safety is not affected. After an image projected by the HUD is reflected by a windshield, a virtual image is formed outside a vehicle. In another example, the display device in this application is integrated into a projector, and the projector may project an image onto a wall or a projection screen. In another example, the display device in this application is integrated into an AR device or a VR device. The AR device may include but is not limited to AR glasses or an AR helmet. The VR device may include but is not limited to VR glasses or a VR helmet. A user may wear the AR device or the VR device to play a game, watch a video, attend a virtual conference, or perform video shopping. In another example, the display device in this application is integrated into an in-vehicle display. The in-vehicle display may be mounted at a rear of a seat in a vehicle, a front passenger seat, or the like. A position at which the in-vehicle display is mounted is not limited in this application. In another example, the display device in this application is integrated into a vehicle light. In addition to an illumination function, the vehicle light may implement an adaptive driving beam (Adaptive Driving Beam, ADB) system, may project a complex graph such as a text or a traffic sign, and may further project a picture such as a video, to add a driving assistance function or an entertainment function.

An embodiment of this application further provides a vehicle, and the foregoing display device is mounted in the vehicle. For example, the display device may be mounted in the vehicle as an HUD, an in-vehicle display, or a vehicle light. The following uses an HUD as an example to describe a specific implementation of mounting a display device in a vehicle.

FIG. 12 is a diagram in which a display device is mounted in a vehicle according to an embodiment of this application. As shown in FIG. 12, a windshield of the vehicle may reflect light output by the display device to a human eye. Specifically, the display device is configured to output two channels of imaging light, where the two channels of imaging light carry different image information. A driver or a passenger is located on one side of the windshield. The windshield is configured to reflect the two channels of imaging light to form a virtual image on the other side of the windshield. The two channels of reflected imaging light are respectively transmitted to the driver's or passenger's eyes. For example, the first channel of imaging light is transmitted to the left eye. The channel of second imaging light is transmitted to the right eye. The display device in this application can effectively resolve excessively high crosstalk in a 3D HUD.

For example, the vehicle may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in embodiments of this application.

An embodiment of this application provides an image generation method. The image generation method is applied to the image generation apparatus described in the embodiments shown in FIG. 3 and FIG.

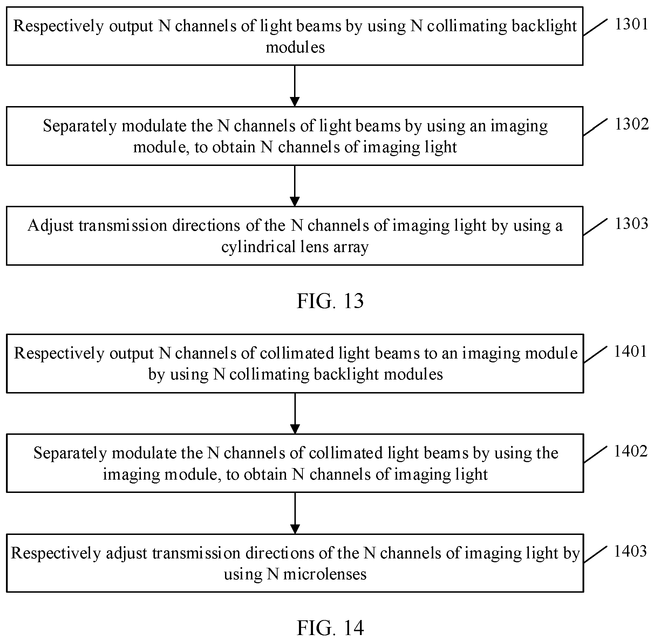

5. FIG. 13 is a diagram of an embodiment of an image generation method according to this application. In this embodiment, the image generation method includes the following steps.

1301: Respectively output N channels of light beams by using N collimating backlight modules.

It should be understood that, in a possible implementation, a one-dimensional collimation manner is used for the collimating backlight modules, that is, light beams output by the collimating backlight modules include first collimated light beams parallel to each other in an X direction. This is applicable to the embodiment shown in FIG. 3. In another possible implementation, as shown in FIG. 5, the image generation apparatus further includes a diffusion module, and a two-dimensional collimation manner is also used for the collimating backlight modules. Specifically, light beams output by the collimating backlight modules include first collimated light beams parallel to each other in an X direction and second collimated light beams parallel to each other in a Y direction, and the diffusion module is configured to diverge the second collimated light beams parallel to each other in the Y direction that are output by the collimating backlight modules. It should be noted that, for features of a parabolic structure, refer to related descriptions of the foregoing embodiments. Details are not described herein again.

1302: Separately modulate the N channels of light beams by using an imaging module, to obtain N channels of imaging light.

It should be noted that, for features of the imaging module, refer to related descriptions of the foregoing embodiments. Details are not described herein again.

1303: Adjust transmission directions of the N channels of imaging light by using a cylindrical lens array.

Specifically, M channels of light beams from each group of collimating backlight modules are modulated by using the imaging module to obtain corresponding M channels of imaging light, and the M channels of imaging light are respectively transmitted to M cylindrical lenses in the cylindrical lens array. Further, the M cylindrical lenses in the cylindrical lens array are configured to respectively adjust M channels of incident imaging light in each group, to transmit the channels of imaging light that carry different image information to a plurality of viewpoints in space. For features of the cylindrical lens array, refer to related descriptions in the foregoing embodiments. Details are not described herein again.

An embodiment of this application provides another image generation method. The image generation method is applied to the image generation apparatus described in the embodiment shown in FIG. 7. FIG. 14 is a diagram of an embodiment of another image generation method according to this application. In this embodiment, the image generation method includes the following steps.

1401: Respectively output N channels of collimated light beams to an imaging module by using N collimating backlight modules.

It should be understood that, because a microlens array is used in the image generation apparatus, a collimating backlight module for two-dimensional collimation needs to be used. It should be noted that, for features of the collimating backlight module for two-dimensional collimation, refer to related descriptions of the foregoing embodiments. Details are not described herein again.

1402: Separately modulate the N channels of collimated light beams by using the imaging module, to obtain N channels of imaging light.

It should be noted that, for features of the imaging module, refer to related descriptions of the foregoing embodiments. Details are not described herein again.

1403: Respectively adjust transmission directions of the N channels of imaging light by using N microlenses.

Specifically, an incident light beam is adjusted by using a lens in the microlens array, to transmit imaging light that carries different image information to a plurality of viewpoints in space. For features of the microlens array, refer to related descriptions in the foregoing embodiments. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. An image generation apparatus, comprising an imaging module, a cylindrical lens array, and N collimating backlight modules, wherein the cylindrical lens array comprises M cylindrical lenses sequentially arranged in a first direction, the N collimating backlight modules comprise K groups of collimating backlight modules, each group of collimating backlight modules comprises M collimating backlight modules sequentially arranged in the first direction, $N=M\times K$, M is an integer greater than 1, and K is an integer greater than or equal to 1;

    the N collimating backlight modules are configured to respectively output N channels of light beams, each of the N channels of light beams comprises a first collimated light beam, and the first collimated light beams are parallel to each other in the first direction;
    the imaging module is configured to separately modulate the N channels of light beams to obtain N channels of imaging light, wherein the N channels of imaging light comprise K groups of imaging light, each group of imaging light comprises M channels of imaging light, and the M channels of imaging light in each group are respectively transmitted to the M cylindrical lenses; and the M cylindrical lenses are configured to respectively adjust transmission directions of the M channels of imaging light in each group.

2. The image generation apparatus according to claim 1, wherein each of the N channels of light beams further comprises a second collimated light beam, the second collimated light beams are parallel to each other in the second direction, K is an integer greater than 1, the K groups of collimating backlight modules are distributed in the second direction, the first direction is perpendicular to the second direction, the image generation apparatus further comprises a diffusion module, and the diffusion module is located between the collimating backlight module and the imaging module; and the diffusion module is configured to diverge each channel of second collimated light beam.

3. The image generation apparatus according to claim 1 or 2, wherein imaging light passing through the cylindrical lens array is transmitted to a plurality of different positions, and the imaging light transmitted to the different positions comprises different image information.

4. The image generation apparatus according to any one of claims 1 to 3, wherein each of the collimating backlight modules comprises a light source and a parabolic structure; and the parabolic structure is configured to collimate a light beam emitted by the light source.

5. The image generation apparatus according to claim 4, wherein the light source is provided at a focus of the parabolic structure.

6. The image generation apparatus according to claim 4 or 5, wherein a maximum length of each cylindrical lens in the first direction is equal to an aperture of the parabolic structure in the first direction.

7. The image generation apparatus according to claim 6, wherein the aperture of the parabolic structure in the first direction and a focal length of the parabolic structure satisfy the following formula:

$$\frac{f}{D} = \frac{1}{4\frac{\sin\varphi}{1+\cos\varphi}},$$

wherein
f indicates the focal length of the parabolic structure, D indicates the aperture of the parabolic structure in the first direction, and $\varphi$ indicates one half of a divergence angle of the light source.

8. An image generation apparatus, comprising an imaging module, a microlens array, and N collimating backlight modules, wherein the microlens array comprises N microlenses, N is an integer greater than 1, the microlenses in the microlens array are arranged in a first direction and a second direction respectively, the N collimating backlight modules are arranged in the first direction and the second direction respectively, and the first direction is perpendicular to the second direction;

the N collimating backlight modules are configured to respectively output N channels of collimated light beams to the imaging module, wherein the collimated light beams are parallel to each other in both the first direction and the second direction; the imaging module is configured to separately modulate the N channels of collimated light beams to obtain N channels of imaging light, wherein the N channels of imaging light are respectively transmitted to the N microlenses; and the N microlenses are configured to respectively adjust transmission directions of the N channels of imaging light.

9. The image generation apparatus according to claim 8, wherein imaging light passing through the microlens array is transmitted to a plurality of different positions, and the imaging light transmitted to the different positions comprises different image information.

10. The image generation apparatus according to claim 8 or 9, wherein each of the collimating backlight modules comprises a light source and a parabolic structure; and the parabolic structure is configured to collimate a light beam emitted by the light source.

11. The image generation apparatus according to claim 10, wherein the light source is provided at a focus of the parabolic structure.

12. The image generation apparatus according to claim 10 or 11, wherein a maximum length of each microlens in the microlens array in the first direction is equal to an aperture of the parabolic structure in the first direction, and a maximum length of each microlens in the microlens array in the second direction is equal to an aperture of the parabolic structure in the second direction.

13. The image generation apparatus according to claim 12, wherein the aperture of the parabolic structure in the first direction or the second direction and a focal length of the parabolic structure satisfy the following formula:

$$\frac{f}{D} = \frac{1}{4\frac{\sin\varphi}{1+\cos\varphi}},$$

wherein

f indicates the focal length of the parabolic structure, D indicates the aperture of the parabolic structure in the first direction or the second direction, and $\varphi$ indicates one half of a divergence angle of the light source.

14. A display device, comprising a processor and the image generation apparatus according to any one of claims 1 to 13, wherein the processor is configured to send image data to the imaging module in the image generation apparatus, and the imaging module is configured to modulate incident light based on the image data to obtain imaging light.

15. A vehicle, comprising the display device according to claim 14, wherein the display device is mounted in the vehicle.

16. An image generation method, wherein the method is applied to an image generation apparatus, the image generation apparatus comprises an imaging module, a cylindrical lens array, and N collimating backlight modules, the cylindrical lens array comprises M cylindrical lenses sequentially arranged in a first direction, the N collimating backlight modules comprise K groups of collimating backlight modules, each group of collimating backlight modules comprises M collimating backlight modules sequentially arranged in the first direction, N=M×K, M is an integer greater than 1, and K is an integer greater than or equal to 1; and the method comprises:

respectively outputting N channels of light beams by using the N collimating backlight modules, wherein each of the N channels of light beams comprises a first collimated light beam, and the first collimated light beams are parallel to each other in the first direction;
separately modulating the N channels of light beams by using the imaging module, to obtain N channels of imaging light, wherein the N channels of imaging light comprise K groups of imaging light, each group of imaging light comprises M channels of imaging light, and the M channels of imaging light in each group are respectively transmitted to the M cylindrical lenses; and
respectively adjusting transmission directions of the M channels of imaging light in each group by using the M cylindrical lenses.

17. The method according to claim 16, wherein each of the N channels of light beams further comprises a second collimated light beam, the second collimated light beams are parallel to each other in the second direction, K is an integer greater than 1, the K groups of collimating backlight modules are distributed in the second direction, the first direction is perpendicular to the second direction, the image generation apparatus further comprises a diffusion module, and the diffusion module is located between the collimating backlight module and the imaging module; and the method further comprises:
diverging each channel of second collimated light beam by using the diffusion module.

18. The method according to claim 16 or 17, wherein imaging light passing through the cylindrical lens array is transmitted to a plurality of different positions, and the imaging light transmitted to the different positions comprises different image information.

19. The method according to any one of claims 16 to 18, wherein each of the collimating backlight modules comprises a light source and a parabolic structure; and the method further comprises:
collimating, by using the parabolic structure, a light beam emitted by the light source.

20. The method according to claim 19, wherein the light source is provided at a focus of the parabolic structure.

21. The method according to claim 19 or 20, wherein a maximum length of each cylindrical lens in the first direction is equal to an aperture of the parabolic structure in the first direction.

22. The method according to claim 21, wherein the aperture of the parabolic structure in the first direction and a focal length of the parabolic structure satisfy the following formula:

$$\frac{f}{D} = \frac{1}{4\frac{\sin\varphi}{1+\cos\varphi}},$$

wherein

f indicates the focal length of the parabolic structure, D indicates the aperture of the parabolic structure in the first direction, and $\varphi$ indicates one half of a divergence angle of the light source.

23. An image generation method, wherein the method is applied to an image generation apparatus, the image generation apparatus comprises an imaging module, a microlens array, and N collimating backlight modules, the microlens array comprises N microlenses, N is an integer greater than 1, the microlenses in the microlens array are arranged in a first direction and a second direction respectively, the N collimating backlight modules are arranged in the first direction and the second direction respectively, and the first direction is perpendicular to the second direction; and the method comprises:

respectively outputting N channels of collimated light beams to the imaging module by using the N collimating backlight modules, wherein the collimated light beams are parallel to each other in both the first direction and the second direction;

separately modulating the N channels of collimated light beams by using the imaging module, to obtain N channels of imaging light, wherein the N channels of imaging light are respectively transmitted to the N microlenses; and

respectively adjusting transmission directions of the N channels of imaging light by using the N microlenses.

24. The method according to claim 23, wherein imaging light passing through the microlens array is transmitted to a plurality of different positions, and the imaging light transmitted to the different positions comprises different image information.

25. The method according to claim 23 or 24, wherein each of the collimating backlight modules comprises a light source and a parabolic structure; and the method further comprises:
collimating, by using the parabolic structure, a light beam emitted by the light source.

26. The method according to claim 25, wherein the light source is provided at a focus of the parabolic structure.

27. The method according to claim 25 or 26, wherein a maximum length of each microlens in the microlens array in the first direction is equal to an aperture of the parabolic structure in the first direction, and a maximum length of each microlens in the microlens array in the second direction is equal to an aperture of the parabolic structure in the second direction.

28. The method according to claim 27, wherein the aperture of the parabolic structure in the first direction or the second direction and a focal length of the parabolic structure satisfy the following formula:

$$\frac{f}{D} = \frac{1}{4\frac{\sin\varphi}{1+\cos\varphi}},$$

wherein
f indicates the focal length of the parabolic structure, D indicates the aperture of the parabolic structure in the first direction or the second direction, and $\varphi$ indicates one half of a divergence angle of the light source.

Real object

Image seen by
the left eye

Image seen by
the right eye

Left eye          Right eye

Image generated
in the brain

FIG. 1

$\Delta w$

$\Delta \theta$

$f$

Imaging module

Slit grating

FIG. 2(a)

Imaging module

$p$

$\Delta\theta$

Lens

FIG. 2(b)

30

20

10

Z  Y

X

FIG. 3

FIG. 4

FIG. 5

FIG. 6(a)

FIG. 6(b)

FIG. 7

Viewpoint

30\70

20

60

10

Z
Y
X

FIG. 8

$X$

$M''$ — — $M$ — — — — $M'$

$r$

$\varphi$

$D$

$F$

$Y$

$f$ ◄►◄ $f$

FIG. 9

FIG. 10

Display device

/ 1101

Processor

/ 1102

Image generation
apparatus

FIG. 11

Windshield

Human eye

Display device

Position of a
virtual image

FIG. 12

Respectively output N channels of light beams by using N collimating backlight modules /‾ 1301

Separately modulate the N channels of light beams by using an imaging module, to obtain N channels of imaging light /‾ 1302

Adjust transmission directions of the N channels of imaging light by using a cylindrical lens array /‾ 1303

FIG. 13

Respectively output N channels of collimated light beams to an imaging module by using N collimating backlight modules /‾ 1401

Separately modulate the N channels of collimated light beams by using the imaging module, to obtain N channels of imaging light /‾ 1402

Respectively adjust transmission directions of the N channels of imaging light by using N microlenses /‾ 1403

FIG. 14

## INTERNATIONAL SEARCH REPORT

| International application No. |
| --- |
| **PCT/CN2022/139483** |

**A. CLASSIFICATION OF SUBJECT MATTER**

G02B27/01(2006.01)i

According to International Patent Classification (IPC) or to both national classification and IPC

**B. FIELDS SEARCHED**

Minimum documentation searched (classification system followed by classification symbols)

IPC: G02B

Documentation searched other than minimum documentation to the extent that such documents are included in the fields searched

Electronic data base consulted during the international search (name of data base and, where practicable, search terms used)

CNPAT, CNKI, EPODOC, WPI, IEEE: 图像, 生成, 显示, 三维, 3D, 柱, 透镜, 阵列, 准直, 背光, 光束, 调制, 发散, 抛物面, 焦距, 口径, image, produc+, three, dimensional, column, lens, array, backlight, modulat+, collimat+, display, panel, paraboloid, focus, beam

**C. DOCUMENTS CONSIDERED TO BE RELEVANT**

| Category* | Citation of document, with indication, where appropriate, of the relevant passages | Relevant to claim No. |
| --- | --- | --- |
| Y | CN 104460017 A (SHENZHEN CHINA STAR OPTOELECTRONICS TECHNOLOGY CO., LTD.) 25 March 2015 (2015-03-25) description, paragraphs [0026]-[0034] | 1, 3-16, 18-28 |
| Y | CN 110297324 A (BOE TECHNOLOGY GROUP CO., LTD.) 01 October 2019 (2019-10-01) description, paragraphs [0094]-[0098], and figure 9 | 1, 3-16, 18-28 |
| A | CN 105445833 A (WANWEI YUNSHI (SHANGHAI) DIGITAL TECHNOLOGY CO., LTD.) 30 March 2016 (2016-03-30) entire document | 1-28 |
| A | CN 107608085 A (SICHUAN UNIVERSITY) 19 January 2018 (2018-01-19) entire document | 1-28 |
| A | CN 108259648 A (SHENZHEN TINNO WIRELESS TECHNOLOGY CO., LTD. et al.) 06 July 2018 (2018-07-06) entire document | 1-28 |

☑ Further documents are listed in the continuation of Box C. ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **08 February 2023** | **20 February 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2022/139483**

| C. | DOCUMENTS CONSIDERED TO BE RELEVANT | |
|---|---|---|
| Category* | Citation of document, with indication, where appropriate, of the relevant passages | Relevant to claim No. |
| A | CN 217386019 U (TCL CHINA STAR OPTOELECTRONICS TECHNOLOGY CO., LTD.) 06 September 2022 (2022-09-06) entire document | 1-28 |
| A | US 2022373817 A1 (E-LEAD ELECTRONIC CO., LTD.) 24 November 2022 (2022-11-24) entire document | 1-28 |

Form PCT/ISA/210 (second sheet) (July 2022)

**INTERNATIONAL SEARCH REPORT**
**Information on patent family members**

International application No.

**PCT/CN2022/139483**

| Patent document cited in search report | | | Publication date (day/month/year) | Patent family member(s) | | | Publication date (day/month/year) |
|---|---|---|---|---|---|---|---|
| CN | 104460017 | A | 25 March 2015 | WO | 2016106793 | A1 | 07 July 2016 |
| CN | 110297324 | A | 01 October 2019 | US | 2021405362 | A1 | 30 December 2021 |
| | | | | EP | 3770668 | A1 | 27 January 2021 |
| | | | | EP | 3770668 | A4 | 30 March 2022 |
| | | | | WO | 2019179085 | A1 | 26 September 2019 |
| CN | 105445833 | A | 30 March 2016 | | None | | |
| CN | 107608085 | A | 19 January 2018 | | None | | |
| CN | 108259648 | A | 06 July 2018 | | None | | |
| CN | 217386019 | U | 06 September 2022 | | None | | |
| US | 2022373817 | A1 | 24 November 2022 | JP | 2022179279 | A | 02 December 2022 |
| | | | | JP | 7189294 | B2 | 13 December 2022 |
| | | | | TWI | 772030 | B | 21 July 2022 |

Form PCT/ISA/210 (patent family annex) (July 2022)